# FASCICULE DE BREVET EUROPEEN

(11) **EP 2 855 936 B1**
(45) Date de publication et mention de la délivrance du brevet: **07.10.2020**
(21) Numéro de dépôt: 13727113.6
(22) Date de dépôt: 30.05.2013
(51) Int. Cl.: F04B 35/04, F04B 39/10, F04B 49/02, F04B 49/03, F04B 49/06, F04B 49/08, F04B 49/20, F16K 17/04, F25B 31/00, F25B 41/04, B60H 1/32, F25B 49/02

(54) **DISPOSITIF DE SECURITE POUR COMPRESSEUR D'UN CIRCUIT DE FLUIDE REFRIGERANT**
SICHERHEITSVORRICHTUNG FÜR EINEN KOMPRESSOR EINES KÜHLMITTELKREISLAUFES
SAFETY DEVICE FOR A COMPRESSOR OF A COOLANT FLUID CIRCUIT

(30) Priorité: 01.06.2012 FR 1201576
(43) Date de publication de la demande: 08.04.2015
(73) Titulaire: Valeo Systemes Thermiques, 78320 Le Mesnil Saint Denis (FR)
(72) Inventeur: LIU, Jin Ming, F-78700 Conflans-Sainte-Honorine (FR); DELAFORGE, Laurent, F-78125 Orcemont (FR)
(74) Mandataire: Tran, Chi-Hai
(86) Numéro de dépôt international: PCT/EP2013/061203
(87) Numéro de publication internationale: WO 2013/178762

(56) Documents cités:
- EP-A1- 1 589 302
- EP-A2- 2 003 407
- DE-A1- 19 956 252
- GB-A- 2 299 380
- JP-A- 2005 337 526
- US-A- 3 933 005
- US-A- 6 026 587
- US-B1- 6 244 831

## Description

Le secteur technique de la présente invention est celui des dispositifs de sécurité destinés à équiper un compresseur de climatisation, notamment pour un circuit de fluide réfrigérant installé sur un véhicule automobile. Un tel dispositif de sécurité trouve une application favorable quand le compresseur est électrique et commandé par un moyen de commande intégré au compresseur.

Un véhicule automobile électrique ou hybride, dont la propulsion est assurée au moins partiellement par un moteur électrique, est couramment équipé d'une installation de ventilation, de chauffage et/ou de climatisation pour modifier les paramètres aérothermiques de l'air contenu ou envoyé à l'intérieur de l'habitacle du véhicule.

Dans le cadre de ces véhicules électriques ou hybrides, le refroidissement ou le chauffage de l'air envoyé dans l'habitacle est assuré par une boucle de climatisation à l'intérieur de laquelle circule un fluide réfrigérant. Cette boucle comprend classiquement un compresseur, un condenseur, un détendeur et un évaporateur parcourus par le fluide réfrigérant. L'évaporateur est positionné dans l'installation de ventilation, chauffage et/ou climatisation généralement montée dans l'habitacle du véhicule pour fournir à ce dernier un flux d'air chaud ou un flux d'air froid en fonction d'une demande de l'utilisateur du véhicule. Le condenseur est quant à lui classiquement installé en face avant du véhicule pour être traversé par un flux d'air extérieur au véhicule.

Dans une telle boucle de climatisation, le compresseur est entrainé par un moteur électrique commandé par un onduleur relié au réseau électrique du véhicule. Ce dernier comprend un calculateur destiné à contrôler le fonctionnement de la boucle de climatisation, notamment en envoyant des informations de pilotage à l'onduleur par l'intermédiaire d'un réseau qui peut être par exemple de type CAN. Parmi ces informations, on trouve une information indiquant le niveau de pression du fluide réfrigérant dans la boucle de climatisation. Une telle information est primordiale pour la fiabilité du compresseur et des composants de la boucle de climatisation.

En cas d'élévation de pression du fluide réfrigérant au dessus d'un seuil déterminé, le calculateur envoie une consigne au compresseur par l'intermédiaire du réseau lui ordonnant une réduction de sa vitesse. L'inconvénient d'une telle organisation réside dans le niveau de sécurité relatif à la transmission de cette information. En effet, en cas de panne ou de dysfonctionnement du réseau, la consigne n'est pas communiquée au compresseur, et la pression peut continuer à augmenter, ce qui conduit à une activation d'une valve de surpression qui équipe le compresseur. Cette valve vide alors la boucle de climatisation, en déchargeant le fluide réfrigérant dans l'atmosphère. Il convient de prendre toutes les mesures pour éviter une telle situation en raison du caractère toxique des fluides réfrigérants.

Le but de la présente invention est de résoudre l'inconvénient décrit ci-dessus principalement en intégrant dans un même composant fixé sur le compresseur les moyens de détection électrique de la pression et les moyens de mise à l'air libre du circuit, en cas de surpression, de tels moyens de mise à l'air libre prenant la forme d'une valve de sécurité. De US 3 933005 et GB 2 299 380 sont connus des dispositifs de sécurité.

L'invention, comme défini dans la revendication 1, a donc pour objet un dispositif de sécurité pour compresseur équipant un circuit de fluide réfrigérant, comprenant au moins une entrée apte à recevoir le fluide réfrigérant et au moins une sortie par laquelle le fluide réfrigérant est apte à sortir dudit dispositif de sécurité, ce dernier comprenant :
- un moyen de détection d'un premier niveau de pression du fluide réfrigérant agencé pour délivrer au compresseur au moins une information électrique relative au niveau de pression détecté,
- une valve de sécurité agencée pour mettre en communication l'entrée et la sortie quand un deuxième niveau de pression est franchi.

La valve de sécurité est alimentée en fluide réfrigérant via le moyen de détection. On s'assure ainsi que le moyen de détection a subit la pression du fluide réfrigérant avant d'activer la valve de sécurité, le cas échéant.

Le moyen de détection et la valve de sécurité sont ainsi rassemblés dans un même composant, l'activation de la valve de sécurité étant dépendante du moyen de détection, puisque le fluide réfrigérant transite par ce dernier avant d'atteindre la valve de sécurité. L'information électrique peut ainsi être communiquée directement au dispositif de commande sans passer par le réseau multiplexé du véhicule.

Selon une caractéristique de l'invention, le moyen de détection et la valve de sécurité sont agencés pour que le deuxième niveau de pression soit supérieur au premier niveau de pression. On garantit ainsi que le moyen de détection repère le premier niveau de pression avant tout actionnement de la valve de sécurité.

Selon une autre caractéristique de l'invention, le compresseur comprend un dispositif de commande d'un moyen pouvant être un moteur électrique, apte à désactiver le compresseur ou à réduire la pression du fluide réfrigérant après avoir reçu ladite information électrique relative au niveau de pression détecté, en provenance du dispositif de sécurité

Selon une autre caractéristique de l'invention, le dispositif de sécurité est apte à communiquer ladite information électrique directement au dispositif de commande, sans que cette information électrique ne passe par le réseau multiplexé du véhicule comportant le compresseur.

Selon une autre caractéristique de l'invention, le moyen de détection comprend un interrupteur électrique générateur de l'information électrique. Un tel interrupteur peut être formé par des contacts électriques, mais il peut également s'agir d'un interrupteur magnétique, notamment un capteur à effet Hall. L'information détectée est ainsi directement exploitable par le réseau de communication du véhicule. Une telle structure permet également d'augmenter le niveau de fiabilité de la détection.

Selon une autre caractéristique de l'invention, le dispositif de sécurité comprend un corps dans lequel est ménagée au moins une cavité qui reçoit le moyen de détection et la valve de sécurité, la cavité étant en communication avec l'entrée et la sortie du corps. Une telle structure facilite la fabrication du dispositif de sécurité puisque le fluide présent dans une même cavité peut agir sur le moyen de détection et sur la valve de sécurité.

Dans une telle situation, la cavité est partagée par une paroi en une première chambre qui reçoit le moyen de détection et une deuxième chambre qui reçoit la valve de sécurité. Une telle solution permet de scinder en deux chambres la cavité simplement par l'ajout d'une paroi. La fabrication du dispositif de sécurité en est facilitée.

Selon une autre caractéristique de l'invention, le moyen de détection comprend un premier ensemble apte à se déplacer en translation sous l'effet de la pression du fluide réfrigérant dans l'entrée. L'avantage de cette structure réside dans le fait qu'il s'agit d'un mouvement de translation qui est particulièrement simple à mettre en œuvre, notamment à guider.

Selon une autre caractéristique de l'invention, la première chambre comprend une préchambre dont la paroi interne délimite un premier siège, le premier ensemble comprenant un premier dispositif d'obturation solidaire d'un premier piston sur lequel prend appui un premier ressort qui maintient le premier dispositif d'obturation en appui sur le premier siège. L'avantage de cette solution réside dans la simplicité de mise en œuvre pour opérer la fermeture ou l'ouverture du premier siège par le dispositif d'obturation.

Selon une autre caractéristique de l'invention, le moyen de détection comprend l'interrupteur électrique générateur de l'information électrique, ledit l'interrupteur électrique comprenant un premier contact électrique solidaire du premier piston et un deuxième contact électrique solidaire du corps. On garantit ainsi un bon niveau de fiabilité du contact électrique en s'assurant que l'un des contacts électriques suit le mouvement du premier piston, alors que l'autre contact électrique est fixe.

Selon une autre caractéristique de l'invention, un connecteur électrique peut être solidaire du corps et relié électriquement à l'interrupteur électrique, de sorte que l'on puisse ainsi raccorder électriquement et de manière amovible le dispositif de sécurité au dispositif de commande du compresseur.

Selon une autre caractéristique de l'invention, le corps comprend au moins un conduit reliant la préchambre à la deuxième chambre, la circulation de fluide réfrigérant dans le conduit étant placée sous la dépendance de la valve de sécurité. La préchambre fait ici partie de la première chambre et forme une portion de celle-ci. Une telle solution technique présente l'avantage de pourvoir fabriquer aisément la préchambre, la deuxième chambre et le conduit.

Selon une autre caractéristique de l'invention, la valve de sécurité comprend un deuxième ensemble apte à se déplacer en translation sous l'effet de la pression du fluide réfrigérant présent dans le conduit. Un tel mouvement de translation est particulièrement simple à mettre en œuvre, et peut être opéré par une structure mécanique simple.

Une extrémité du conduit forme un deuxième siège, le deuxième ensemble comprenant un deuxième dispositif d'obturation solidaire d'un deuxième piston sur lequel prend appui un deuxième ressort qui maintient le deuxième dispositif d'obturation en appui sur le deuxième siège. Cette solution technique permet aisément d'ouvrir ou de fermer le conduit, à l'aide de moyens technique simple et fiable.

Le dispositif de sécurité peut comprendre un dispositif de réglage du premier niveau de pression et/ou un dispositif de réglage du deuxième niveau de pression. Ces dispositifs du premier niveau de pression et du deuxième niveau de pression agissent sur le premier ressort et respectivement sur le deuxième ressort, de manière à adapter le tarage de ces derniers. L'avantage de cette disposition réside dans la possibilité d'utiliser un même dispositif de sécurité adaptable à divers types de compresseur, et ainsi d'adapter le premier niveau de pression et le deuxième niveau de pression aux conditions d'utilisation du circuit de fluide réfrigérant.

De manière avantageuse, la sortie forme une mise à l'air libre du fluide réfrigérant. En cas de dépassement du deuxième niveau de pression, cette solution permet de canaliser aisément le fluide réfrigérant.

L'invention concerne également un compresseur, notamment électrique, pour circuit de fluide réfrigérant, comprenant un dispositif de sécurité comprenant l'une quelconque des caractéristiques détaillées ci-dessus. La disposition du dispositif de sécurité sur le compresseur permet de former un sous ensemble dont la sécurité relative à la pression du fluide réfrigérant est opérée de manière autonome. On forme ainsi un sous-ensemble qui augmente le niveau de fiabilité du circuit de fluide réfrigérant.

Un tel compresseur peut comprendre un mécanisme de compression entrainé par un moteur électrique et un dispositif de commande du moteur électrique, le dispositif de commande étant placé sous la dépendance de l'information électrique. Le dispositif de commande peut ainsi ordonner une réduction de la pression dès réception de l'information électrique en provenance du dispositif de sécurité. L'avantage de cette solution technique réside dans le fait que le dispositif de sécurité peut agir directement sur le dispositif de commande sans passer par le réseau du véhicule. Le dispositif de commande peut ainsi agir instantanément sur le moteur électrique pour réduire la pression, en cas de dépassement du premier niveau de pression.

Un tout premier avantage selon l'invention réside dans l'augmentation du niveau de fiabilité dans la transmission de l'information électrique relative à une élévation de pression au dessus d'un seuil déterminé. L'invention permet de garantir qu'une détection électrique a été opérée préalablement à la mise à l'air libre du fluide réfrigérant, cette information électrique étant directement communiquée au dispositif de commande embarqué sur le compresseur, sans passer par le réseau multiplexé du véhicule.

L'invention concerne également un procédé de détection et de gestion d'une élévation de la pression et d'une surpression du fluide réfrigérant circulant dans un compresseur selon l'invention qui comporte un dispositif de sécurité comprenant l'une quelconque des caractéristiques détaillées ci-dessus. Ce procédé de détection et de gestion comprend les étapes suivantes :
- la détection d'un premier niveau de pression du fluide réfrigérant par le moyen de détection ;
- l'émission d'une information électrique relative au niveau de pression détecté, par le dispositif de sécurité ;
- la communication de ladite information électrique par le dispositif de sécurité directement au dispositif de commande du compresseur sans passer par le réseau multiplexé du véhicule comportant le compresseur ;
- l'émission par le dispositif de commande d'une instruction de réduire la pression ou de désactiver le compresseur à la suite de la réception de ladite information électrique.

Selon une caractéristique de l'invention, le procédé de détection et de gestion de la pression selon l'invention comprend les étapes suivantes :
- la détection d'un deuxième niveau de pression du fluide réfrigérant par le moyen de détection ;
- l'émission d'une information électrique relative au niveau de pression détecté, par le dispositif de sécurité ;
- la communication de ladite information électrique par le dispositif de sécurité directement à la valve de sécurité ;
- la mise en communication de l'entrée et de la sortie du compresseur par la valve de sécurité à la suite de la réception de ladite information électrique.

D'autres caractéristiques, détails et avantages de l'invention ressortiront plus clairement à la lecture de la description donnée ci-après à titre indicatif en relation avec des dessins dans lesquels :
- la figure 1 est une vue en coupe d'un dispositif de sécurité selon l'invention, à l'état de repos,
- la figure 2 est une vue en coupe du dispositif de sécurité, en une position où le moyen de détection signale une élévation de pression,
- la figure 3 est une vue en coupe du dispositif de sécurité, en une position de surpression,
- la figure 4 est une vue schématique d'une compresseur intégrant un dispositif de sécurité selon l'invention.

Il faut noter que les figures exposent l'invention de manière détaillée pour mettre en œuvre l'invention, lesdites figures pouvant bien entendu servir à mieux définir l'invention, le cas échéant. Dans la description qui suit, les termes « élévation de pression » consistent en un premier niveau de pression dans le circuit de fluide réfrigérant détectable par le dispositif de sécurité, mais inférieur à une surpression qui entraîne une évacuation dans l'atmosphère du fluide réfrigérant, cette surpression correspondant à un deuxième niveau de pression.

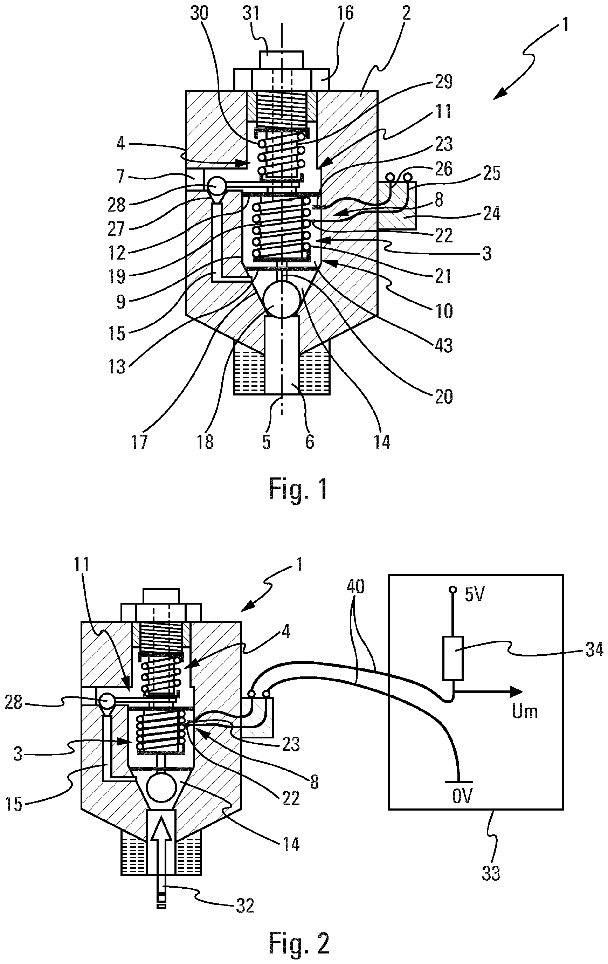

La figure 1 illustre un exemple de réalisation du dispositif de sécurité 1 selon l'invention. Un tel dispositif est particulièrement adapté pour être solidarisé sur un compresseur d'un circuit de fluide réfrigérant, notamment un compresseur électrique. La figure 1 montre ce dispositif de sécurité dans une position dite de « repos », correspondant à une situation où la pression du fluide réfrigérant dans le circuit est inférieure au premier niveau de pression et au deuxième niveau de pression.

Ce dispositif de sécurité 1 rassemble deux fonctions dans un même composant. La première fonction consiste en une détection d'une élévation de pression du fluide réfrigérant contenu dans le circuit de fluide réfrigérant au-delà d'un premier seuil. Il s'agit d'un niveau de pression qui peut générer des détériorations au niveau des composants du circuit de fluide réfrigérant, ce niveau de pression pouvant être ramené à une valeur acceptable par une action sur le compresseur, notamment une réduction de sa vitesse de rotation ou de sa cylindrée. Cette première fonction est mise en œuvre par un moyen de détection référencé 3.

La deuxième fonction consiste en une ouverture du circuit de fluide réfrigérant pour que ce dernier puisse s'échapper dans l'atmosphère. Cette deuxième fonction est mise en œuvre par une valve de sécurité 4 constitutive du dispositif de sécurité 1, quand le fluide réfrigérant atteint un deuxième niveau de pression qui risque de provoquer un éclatement des composants du circuit, notamment des conduites.

Sur la figure 1, le dispositif de sécurité 1 comprend un corps 2 qui reçoit le moyen de détection 3 de la pression du fluide réfrigérant et la valve de sécurité 4 de la pression du fluide réfrigérant.

Le corps 2 s'étend selon un axe longitudinal 5. Il est pourvu d'au moins une entrée 6 apte à recevoir le fluide réfrigérant et d'au moins une sortie 7 par laquelle le fluide réfrigérant est apte à sortir dudit dispositif de sécurité 1. L'entrée 6 prend la forme d'une ouverture qui s'étend co-axialement à l'axe longitudinal 5, alors que la sortie 7 est formée par un orifice qui s'étend, par exemple, perpendiculairement à l'axe longitudinal 5.

Autour de l'entrée 6, le corps 2 est pourvu d'un moyen de solidarisation apte à fixer le dispositif de sécurité 1 sur le compresseur. Selon un exemple de réalisation, le moyen de solidarisation prend la forme d'un filetage pratiqué à la périphérie du corps 2, sensiblement au droit de l'entrée 6.

L'exemple de la figure 1 montre une unique entrée 6 et une unique sortie 7, mais l'invention couvre un dispositif de sécurité 1 pourvu d'une pluralité d'entrées et/ou une pluralité de sorties.

Le moyen de détection 3 d'un premier niveau de pression du fluide réfrigérant est agencé pour délivrer au compresseur au moins une information électrique relative au niveau de pression détecté. En d'autres termes, ce moyen de détection 3 est formé par un premier ensemble mobile sous l'effet de la pression du fluide réfrigérant présent dans l'entrée 6, le déplacement de ce premier ensemble venant modifier l'état d'un interrupteur électrique 8.

La valve de sécurité 4 détecte un deuxième niveau de pression du fluide réfrigérant qui a transité par le moyen de détection 3. On comprend ici que la valve de sécurité 4 reçoit du fluide réfrigérant lorsque le moyen de détection 3 est actif, c'est-à-dire qui délivre une information électrique illustrant une élévation de pression au dessus du premier seuil. Cette valve de sécurité 4 est agencée pour mettre en communication l'entrée 6 et la sortie 7 quand le deuxième niveau de pression est atteint, ce deuxième niveau de pression étant supérieur au premier niveau de pression. Cette mise en communication de l'entrée 6 avec la sortie 7 réalise une mise à l'air libre du fluide réfrigérant contenu dans le circuit de fluide réfrigérant.

Une cavité 9 est formée à l'intérieur du corps 2. Cette cavité 9 s'étend sensiblement selon l'axe longitudinal 5 et reçoit le moyen de détection 3, ainsi que la valve de sécurité 4. Cette cavité 9 est en communication avec l'entrée 6 et la sortie 7. De manière plus détaillée, la circulation de fluide réfrigérant entre l'entrée 6 et la cavité 9 est placée sous la dépendance du moyen de détection 3 de la pression de fluide réfrigérant, alors que la circulation de fluide réfrigérant entre l'entrée 6 et la sortie 7 est placée sous la dépendance du moyen de détection 3 combiné à la valve de sécurité 4.

La cavité 9 est partagée en deux chambres, le moyen de détection 3 étant logé dans une première chambre 10 alors que la valve de sécurité 4 est logée dans une deuxième chambre référencée 11. Le partage de la cavité 9 en cette première chambre et en cette deuxième chambre est mis en œuvre par une paroi 12, qui s'étend notamment transversalement à l'axe longitudinal 5.

La première chambre 10 reçoit également une plaque 13, séparant ainsi la première chambre en une préchambre 14 et un volume 43. La première chambre 10 est ainsi délimitée par la paroi 12, la paroi interne de la cavité 9 et le moyen de détection 3. La préchambre 14 est quant à elle délimitée par la plaque 13, la paroi interne de la cavité 9 et un premier dispositif d'obturation 18, alors que le volume 43 est délimité par la paroi 12, la paroi interne de la cavité 9 et la plaque 13. Ce volume 43 est ainsi isolé de la préchambre 14 par la plaque 13, de manière à ce que le fluide réfrigérant ne pénètre pas dans ce volume, en raison de la présence de l'interrupteur électrique 8.

La deuxième chambre 11 reçoit la valve de sécurité 4. Cette deuxième chambre est directement en communication avec la sortie 7, en ce sens qu'aucun élément n'empêche une sortie du fluide réfrigérant présent dans la deuxième chambre 11. Cette deuxième chambre 11 débouche du corps 2 et est obturée par un dispositif de réglage du deuxième niveau de pression 16 de la valve de sécurité 4. Cette deuxième chambre 11 est ainsi délimitée par la valve de sécurité 4, le dispositif de réglage du deuxième niveau de pression 16 et la paroi interne de la cavité 9.

Une communication entre la préchambre 14 et la deuxième chambre 11 est réalisée au travers du corps 2. Selon un exemple de réalisation, cette communication est mise en œuvre par un conduit 15 ménagé dans le corps, la circulation de fluide réfrigérant dans ce conduit 15 étant placée sous la dépendance de la valve de sécurité 4.

Le moyen de détection 3 comprend un premier ensemble apte à se déplacer en translation, notamment selon l'axe longitudinal 5, sous l'effet de la pression du fluide réfrigérant dans l'entrée 6. La paroi interne de la cavité 9 située dans la préchambre 14 forme un siège 17, notamment de section conique, contre lequel le premier ensemble prend appui pour interdire une circulation de fluide réfrigérant depuis l'entrée 6 vers la préchambre 14. Le premier ensemble comprend ainsi le premier dispositif d'obturation 18 solidaire d'un premier piston 19. Selon un exemple de réalisation, le premier dispositif d'obturation 18 prend la forme d'une bille ou d'un pointeau, et ce dispositif d'obturation 18 est relié mécaniquement au premier piston 19 par une tige 20.

On notera que le premier piston 19 s'étend dans le volume 43 alors que le dispositif d'obturation 18 s'étend dans la préchambre 14. La tige 20 traverse donc la plaque 13, une étanchéité au fluide réfrigérant étant réalisée à l'endroit de ce passage.

Le premier ensemble comprend encore un premier ressort 21 qui prend appui d'un côté sur un dispositif de réglage du premier niveau de pression 31 du moyen de détection 3, et de l'autre sur le premier piston 19, de manière à maintenir le premier dispositif d'obturation 18 en appui sur le premier siège 17. Le tarage de ce premier ressort détermine le premier niveau de pression, une force exercée par le fluide réfrigérant contre le dispositif d'obturation 18 venant en opposition contre une force générée par le premier ressort 21. Quand la force du fluide réfrigérant dépasse la force générée par le premier ressort 21, le premier ensemble translate et autorise une fermeture de l'interrupteur électrique 8.

Cet interrupteur électrique 8 est l'élément générateur de l'information électrique. Selon un exemple de réalisation, il comprend un premier contact électrique 22 solidaire du premier piston 19 et un deuxième contact électrique 23 solidaire du corps 2. Chacun de ces contacts électriques est raccordé à un connecteur électrique 24 par le biais de deux fils électriques référencés 25 et 26. Un tel connecteur électrique 24 est solidarisé sur le corps 2, avantageusement sur la périphérie externe de ce dernier.

La valve de sécurité 4 comprend un deuxième ensemble apte à se déplacer en translation selon l'axe longitudinal 5, sous l'effet de la pression du fluide réfrigérant présent dans le conduit 15. A l'extrémité du conduit 15 qui débouche dans la deuxième chambre 11, est prévu un deuxième siège 27. Ce dernier est formé dans le corps 2 et présente une forme évasée. Ce deuxième siège 27 reçoit un deuxième dispositif d'obturation 28 constitutif du deuxième ensemble. Ce deuxième dispositif d'obturation est relié mécaniquement à un deuxième piston 29 qui peut se déplacer en translation lorsque la pression du fluide réfrigérant sur le deuxième dispositif d'obturation 28 dépasse le deuxième niveau de pression.

Le deuxième dispositif d'obturation 28 peut, par exemple, prendre la forme d'une bille ou d'un pointeau qui se loge dans le deuxième siège 27. Un deuxième ressort 30 est installé autour du deuxième piston et prend appui d'un côté contre une extrémité du deuxième piston, et de l'autre contre le dispositif de réglage du deuxième niveau de pression 16 de la valve de sécurité 4. Ce deuxième ressort exerce ainsi une force de sens opposé à la force exercée par le fluide réfrigérant sur le deuxième dispositif d'obturation 28. Le tarage de ce deuxième ressort détermine ainsi le deuxième niveau de pression qui, lorsqu'il est dépassé, autorise une circulation du fluide réfrigérant depuis l'entrée 6 jusqu'à la sortie 7, puis dans l'atmosphère.

Le dispositif de sécurité 1 peut encore comprendre le dispositif de réglage du deuxième niveau de pression 16 du deuxième niveau de pression. A titre d'exemple de réalisation, ce dispositif de réglage du deuxième niveau de pression 16 est formé par un élément agencé pour exercer une contrainte sur le deuxième ressort 30. Cet élément est en prise dans le corps 2 et vient en appui contre une extrémité du deuxième ressort 30. Le tarage de ce dernier peut ainsi être adapté et corrélativement, le deuxième niveau de pression peut être modifié.

De manière complémentaire ou alternative, le dispositif de sécurité 1 comprend un dispositif de réglage du premier niveau de pression 31 du premier niveau de pression. Ce un dispositif de réglage du premier niveau de pression 31 agit sur le moyen de détection 3, par exemple en venant en appui contre une extrémité du premier piston 19. Ce un dispositif de réglage du premier niveau de pression 31 prend notamment la forme d'une vis en prise dans le dispositif de réglage du deuxième niveau de pression 16. Cette vis passe au travers du deuxième piston 29 et de la paroi 12, pour venir au contact du premier ressort 21. Le tarage du premier ressort 21 peut ainsi être réglé, de manière à exercer plus ou moins de force sur le premier dispositif d'obturation 18, et ainsi adapter le premier niveau de pression.

La figure 2 montre le dispositif de sécurité 1 dans une situation où le premier niveau de pression est franchi. La structure du dispositif de sécurité 1 représentée sur cette figure est identique à celle illustrée à la figure 1, et on se reportera à la description ci-dessus pour en connaître les caractéristiques.

La figure 2 montre le dispositif de sécurité 1 raccordé électriquement à un dispositif de commande 33 d'un compresseur électrique par un câble 40. Le dispositif de commande 33 est représenté ici de manière partielle, mais on retiendra que celui-ci est solidaire du compresseur électrique et qu'il pilote le fonctionnement d'un moteur électrique embarqué dans le compresseur.

Le fluide réfrigérant est représenté par une flèche référencée 32. L'élévation de la pression au-delà du premier niveau de pression provoque une translation du moyen de détection 3. Ce mouvement de translation amène le premier contact électrique 22 contre le deuxième contact électrique 23. Cette mise en contact est alors détectée par le dispositif de commande 33, qui constate une chute de tension aux bornes d'une résistance 34.

Le dispositif de commande 33 est ainsi informé d'une élévation de pression du fluide réfrigérant et peut ainsi réduire, par exemple la vitesse de rotation ou la cylindrée du compresseur, de sorte à ramener la pression du fluide réfrigérant en dessous du premier niveau de pression.

En revanche, la pression du fluide réfrigérant est inférieure au deuxième niveau de pression. La valve de sécurité 4 reste ainsi dans une position où le conduit 15 est obturé par le deuxième dispositif d'obturation 28. Le fluide réfrigérant est donc contenu dans la préchambre 14 et n'atteint pas la deuxième chambre 11.

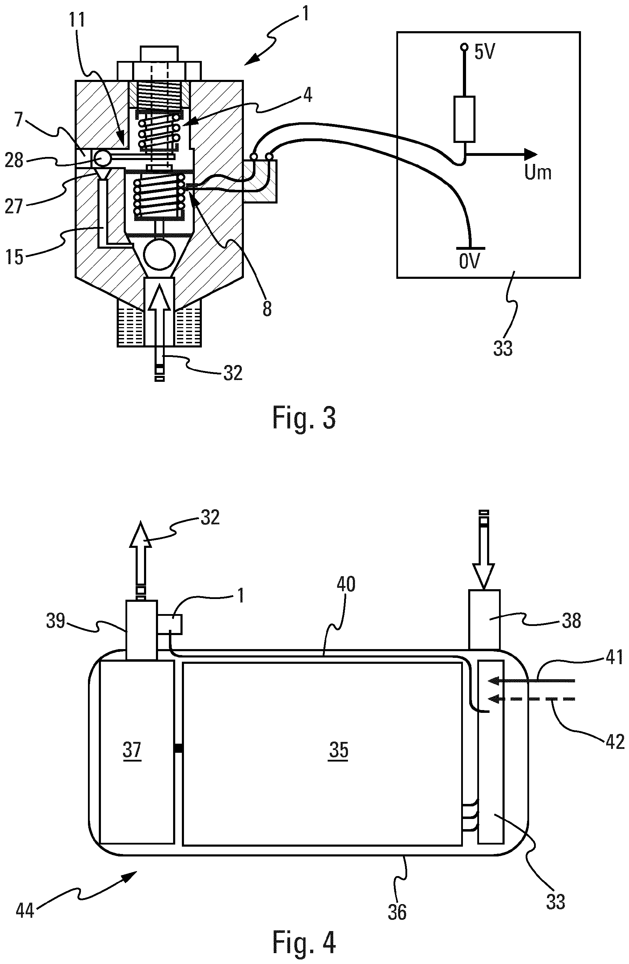

La figure 3 montre le dispositif de sécurité 1 dans une situation où le deuxième niveau de pression est franchi. La structure du dispositif de sécurité 1 représentée sur cette figure est identique à celle illustrée aux figures 1 ou 2, et on se reportera à la description ci-dessus pour en connaître les caractéristiques.

Dans cette situation, le dispositif de commande 33 du compresseur électrique est informé d'une élévation de pression du fluide réfrigérant par la fermeture de l'interrupteur 8.

Dans l'hypothèse où la pression du fluide réfrigérant continue à croître, la valve de sécurité 4 détecte cette surpression, puisque ce fluide réfrigérant présent dans le conduit 15 vient pousser le deuxième dispositif d'obturation 28 hors du deuxième siège 27. Ce mouvement de translation de la valve de sécurité 4 permet au fluide réfrigérant présent dans le conduit 15 de remplir la deuxième chambre 11, puis de s'échapper dans l'atmosphère via la sortie 7. C'est ainsi que la mise à l'air libre du circuit de fluide réfrigérant est réalisée en cas de surpression.

La figure 4 montre l'intégration du dispositif de sécurité 1 détaillé ci-dessus dans un compresseur électrique 44 pour circuit de fluide réfrigérant d'un véhicule automobile.

Le compresseur est électrique en ce sens que son travail de compression est mis en œuvre par un moteur électrique 35. Selon l'exemple représenté sur cette figure, le moteur électrique 35 est installé à l'intérieur d'une enveloppe 36, formée par une pluralité de boîtiers assemblés les uns aux autres, délimitant l'encombrement général du compresseur. Cette enveloppe 36 comprend une admission 38 de fluide réfrigérant et une évacuation 39 de ce même fluide réfrigérant 32.

Cette enveloppe 36 loge un mécanisme de compression 37 entrainé par le moteur électrique 35, ce mécanisme de compression élevant la pression du fluide réfrigérant pour opérer le cycle thermodynamique qui prend place dans le circuit de fluide réfrigérant. Le dispositif de sécurité 1 est installé de manière à ce que son entrée puisse recevoir le fluide réfrigérant dont la pression a été élevée par le mécanisme de compression 37. Selon un exemple de réalisation, le dispositif de commande 1 est installé au niveau de l'évacuation 39.

Le câble électrique 40 relie électriquement le connecteur électrique du dispositif de sécurité 1 au dispositif de commande 33 du compresseur, de manière à délivrer l'information électrique.

Ce dispositif de commande 33 peut être alimenté par un réseau électrique haute tension 41. Il peut également être alimenté par un réseau électrique basse tension 42. Ce dispositif de commande 33 est connecté au moteur électrique 35 en vue de lui fournir l'énergie nécessaire à son pilotage. Ce dispositif de commande 33 forme ainsi un onduleur qui adapte le réseau électrique haute tension pour délivrer une tension et un courant électrique qui conviennent pour la commande du moteur électrique 35.

## Revendications

1. Dispositif de sécurité (1) pour compresseur (44) équipant un circuit de fluide réfrigérant, comprenant au moins une entrée (6) apte à recevoir le fluide réfrigérant et au moins une sortie (7) par laquelle le fluide réfrigérant est apte à sortir dudit dispositif de sécurité (1), ce dernier comprenant :
- un moyen de détection (3) d'un premier niveau de pression du fluide réfrigérant agencé pour délivrer au compresseur (44) au moins une information électrique relative au niveau de pression détecté,
- une valve de sécurité (4) agencée pour mettre en communication l'entrée (6) avec la sortie (7) quand un deuxième niveau de pression est franchi, étant **caractérisé par**
la valve de sécurité (4) étant alimentée en fluide réfrigérant via le moyen de détection (3).

2. Dispositif de sécurité selon la revendications 1, dans lequel le moyen de détection (3) et la valve de sécurité (4) sont agencés de sorte que le deuxième niveau de pression soit supérieur au premier niveau de pression.

3. Dispositif de sécurité selon la revendication 1 ou 2, dans lequel le moyen de détection (3) comprend un interrupteur électrique (8) générateur de l'information électrique.

4. Dispositif de sécurité selon l'une quelconque des revendications précédentes, comprenant un corps (2) dans lequel est ménagé au moins une cavité (9) qui reçoit le moyen de détection (3) et la valve de sécurité (4), la cavité (9) étant en communication avec l'entrée (6) et la sortie (7).

5. Dispositif de sécurité selon la revendication 4, dans lequel la cavité (9) est partagée par une paroi (12) en une première chambre (10) qui reçoit le moyen de détection (3) et une deuxième chambre (11) qui reçoit la valve de sécurité (4).

6. Dispositif de sécurité selon la revendication 5, dans lequel le moyen de détection (3) comprend un premier ensemble apte à se déplacer en translation sous l'effet de la pression du fluide réfrigérant dans l'entrée (6).

7. Dispositif de sécurité selon la revendication 6, dans lequel la première chambre (10) comprend une préchambre (14) dont la paroi interne délimite un premier siège (17), le premier ensemble comprenant un premier dispositif d'obturation (18) solidaire d'un premier piston (19) sur lequel prend appui un premier ressort (21) qui maintient le premier dispositif d'obturation (18) en appui sur le premier siège (17).

8. Dispositif de sécurité selon la revendication 7, dans lequel le moyen de détection (3) comprend un interrupteur électrique (8) générateur de l'information ' électrique, ledit l'interrupteur électrique (8) comprenant un premier contact électrique (22) solidaire du premier piston (19) et un deuxième contact électrique (23) solidaire du corps (2).

9. Dispositif de sécurité selon l'une quelconque des revendications 7 à 8, dans lequel le corps (2) comprend au moins un conduit (15) reliant la préchambre (14) à la deuxième chambre (11), la circulation de fluide réfrigérant dans le conduit (15) étant placée sous la dépendance de la valve de sécurité (4).

10. Dispositif de sécurité selon la revendication 9, dans lequel la valve de sécurité (4) comprend un deuxième ensemble apte à se déplacer en translation sous l'effet de la pression du fluide réfrigérant présent dans le conduit (15).

11. Dispositif de sécurité selon la revendication 10, dans lequel une extrémité du conduit (15) forme un deuxième siège (27), le deuxième ensemble comprenant un deuxième dispositif d'obturation (28) solidaire d'un deuxième piston (29) sur lequel prend appui un deuxième ressort (30) qui maintient le deuxième dispositif d'obturation (28) en appui sur le deuxième siège (27).

12. Dispositif de sécurité selon l'une quelconque des revendications précédentes, dans lequel est prévu au moins un dispositif de réglage du premier niveau de pression (31) du premier niveau de pression et/ou au moins un dispositif de réglage du deuxième niveau de pression (16) du deuxième niveau de pression.

13. Compresseur (44) pour circuit de fluide réfrigérant, comprenant un dispositif de sécurité (1) selon l'une quelconque des revendications précédentes.

14. Compresseur selon la revendication 13, comprenant un mécanisme de compression (37) entraîné par un moteur électrique (35) et un dispositif de commande (33) du moteur électrique (35), le dispositif de commande (33) étant placé sous la dépendance de l'information électrique.

15. Compresseur selon l'une des revendications 13 et 14, **caractérisé en ce que** le dispositif de commande (33) est apte à ordonner une réduction de la pression du fluide réfrigérant après avoir reçu ladite information électrique en provenance du dispositif de sécurité (1).

16. Compresseur selon l'une des revendications 13 et 14, **caractérisé en ce que** le dispositif de commande (33) est apte à désactiver le compresseur (44) après avoir reçu ladite information électrique en provenance du dispositif de sécurité (1).

## Patentansprüche

1. Sicherheitsvorrichtung (1) für einen Kompressor (44), mit dem ein Kältemittelkreislauf ausgestattet ist, umfassend mindestens einen Einlass (6), der geeignet ist, das Kältemittel aufzunehmen, und mindestens einen Auslass (7), durch den das Kältemittel aus der Sicherheitsvorrichtung (1) austreten kann, wobei Letztere umfasst:
- eine Detektionseinrichtung (3) zum Detektieren eines ersten Druckniveaus des Kältemittels, die dazu ausgelegt ist, an den Kompressor (44) mindestens eine elektrische Information bezüglich des detektierten Druckniveaus abzugeben,
- ein Sicherheitsventil (4), das dazu ausgelegt ist, den Einlass (6) mit dem Auslass (7) in Verbindung zu bringen, wenn ein zweites Druckniveau überschritten wird,
**dadurch gekennzeichnet, dass** dem Sicherheitsventil (4) das Kältemittel über die Detektionseinrichtung (3) zugeführt wird.

2. Sicherheitsvorrichtung nach Anspruch 1, wobei die Detektionseinrichtung (3) und das Sicherheitsventil (4) so ausgelegt sind, dass das zweite Druckniveau über dem ersten Druckniveau liegt.

3. Sicherheitsvorrichtung nach Anspruch 1 oder 2, wobei die Detektionseinrichtung (3) einen elektrischen Schalter (8) umfasst, der die elektrische Information erzeugt.

4. Sicherheitsvorrichtung nach einem der vorhergehenden Ansprüche, umfassend einen Körper (2), in dem mindestens ein Hohlraum (9) ausgebildet ist, der die Detektionseinrichtung (3) und das Sicherheitsventil (4) aufnimmt, wobei der Hohlraum (9) mit dem Einlass (6) und dem Auslass (7) in Verbindung steht.

5. Sicherheitsvorrichtung nach Anspruch 4, wobei der Hohlraum (9) durch eine Wand (12) in eine erste Kammer (10), welche die Detektionseinrichtung (3) aufnimmt, und in eine zweite Kammer (11), die das Sicherheitsventil (4) aufnimmt, geteilt wird.

6. Sicherheitsvorrichtung nach Anspruch 5, wobei die Detektionseinrichtung (3) eine erste Anordnung umfasst, die geeignet sich, sich unter der Wirkung des Drucks des Kältemittels im Einlass (6) translatorisch zu verlagern.

7. Sicherheitsvorrichtung nach Anspruch 6, wobei die erste Kammer (10) eine Vorkammer (14) umfasst, deren Innenwand einen ersten Sitz (17) begrenzt, wobei die erste Anordnung eine erste Verschlussvorrichtung (18) umfasst, die fest mit einem ersten Kolben (19) verbunden ist, an dem sich eine erste Feder (21) abstützt, welche die erste Verschlussvorrichtung (18) an dem ersten Sitz (17) abgestützt hält.

8. Sicherheitsvorrichtung nach Anspruch 7, wobei die Detektionseinrichtung (3) einen elektrischen Schalter (8) umfasst, der die elektrische Information erzeugt, wobei der elektrische Schalter (8) einen ersten elektrischen Kontakt (22), der fest mit dem ersten Kolben (19) verbunden ist, und einen zweiten elektrischen Kontakt (23), der fest mit dem Körper (2) verbunden ist, umfasst.

9. Sicherheitsvorrichtung nach einem der Ansprüche 7 bis 8, wobei der Körper (2) mindestens einen Kanal (15) umfasst, der die Vorkammer (14) mit der zweiten Kammer (11) verbindet, wobei die Kältemittelzirkulation in dem Kanal (15) vom Sicherheitsventil (4) abhängig ist.

10. Sicherheitsvorrichtung nach Anspruch 9, wobei das Sicherheitsventil (4) eine zweite Anordnung umfasst, die geeignet ist, sich unter der Wirkung des Drucks des im Kanal (15) vorhandenen Kältemittels translatorisch zu verlagern.

11. Sicherheitsvorrichtung nach Anspruch 10, wobei ein Ende des Kanals (15) einen zweiten Sitz (27) bildet, wobei die zweite Anordnung eine zweite Verschlussvorrichtung (28) umfasst, die fest mit einem zweiten Kolben (29) verbunden ist, an dem sich eine zweite Feder (30) abstützt, welche die zweite Verschlussvorrichtung (28) an dem zweite Sitz (27) abgestützt hält.

12. Sicherheitsvorrichtung nach einem der vorhergehenden Ansprüche, wobei mindestens eine Einstellvorrichtung zum Einstellen des ersten Druckniveaus (31) des ersten Druckniveaus und/oder mindestens eine Einstellvorrichtung zum Einstellen des zweiten Druckniveaus (16) des zweiten Druckniveaus vorgesehen ist.

13. Kompressor (44) für einen Kältemittelkreislauf, der eine Sicherheitsvorrichtung (1) nach einem der vorhergehenden Ansprüche umfasst.

14. Kompressor nach Anspruch 13, umfassend einen durch einen Elektromotor (35) angetriebenen Kompressionsmechanismus (37) und eine Steuerungsvorrichtung (33) zur Steuerung des Elektromotors (35), wobei die Steuerungsvorrichtung (33) von der elektrischen Information abhängig ist.

15. Kompressor nach einem der Ansprüche 13 und 14, **dadurch gekennzeichnet, dass** die Steuerungsvorrichtung (33) geeignet ist, eine Verringerung des Drucks des Kältemittels anzuordnen, nachdem sie die von der Sicherheitsvorrichtung (1) kommende elektrische Information erhalten hat.

16. Kompressor nach einem der Ansprüche 13 und 14, **dadurch gekennzeichnet, dass** die Steuerungsvorrichtung (33) geeignet ist, den Kompressor (44) zu deaktivieren, nachdem sie die von der Sicherheitsvorrichtung (1) kommende elektrische Information erhalten hat.

## Claims

1. Safety device (1) for a compressor (44) with which a coolant circuit is equipped, comprising at least one inlet (6) capable of receiving the coolant and at least one outlet (7) through which the coolant can exit from said safety device (1), the latter comprising:
- a means for detecting (3) a first pressure level of the coolant arranged to deliver to the compressor (44) at least one electrical information item relating to the detected pressure level,
- a safety valve (4) arranged to connect the inlet (6) with the outlet (7) when a second pressure level is crossed, it being **characterized by** the safety valve (4) being supplied with coolant via the detection means (3).

2. Safety device according to Claim 1, wherein the detection means (3) and the safety valve (4) are arranged so that the second pressure level is higher than the first pressure level.

3. Safety device according to Claim 1 or 2, wherein the detection means (3) comprises an electrical switch (8) generating the electrical information item.

4. Safety device according to any one of the preceding claims, comprising a body (2) in which there is formed at least one cavity (9) which receives the detection means (3) and the safety valve (4), the cavity (9) being connected with the inlet (6) and the outlet (7).

5. Safety device according to Claim 4, wherein the cavity (9) is divided by a wall (12) into a first chamber (10) which receives the detection means (3) and a second chamber (11) which receives the safety valve (4) .

6. Safety device according to Claim 5, wherein the detection means (3) comprises a first assembly that can be displaced in translation under the effect of the pressure of the coolant in the inlet (6) .

7. Safety device according to Claim 6, wherein the first chamber (10) comprises a prechamber (14) whose inner wall delimits a first seat (17), the first assembly comprising a first plugging device (18) secured to a first piston (19) on which a first spring (21) presses, which keeps the first plugging device (18) pressed onto the first seat (17) .

8. Safety device according to Claim 7, wherein the detection means (3) comprises an electrical switch (8) generating the electrical information item, said electrical switch (8) comprising a first electrical contact (22) secured to the first piston (19) and a second electrical contact (23) secured to the body (2).

9. Safety device according to either one of Claims 7 and 8, wherein the body (2) comprises at least one duct (15) linking the prechamber (14) to the second chamber (11), the circulation of coolant in the duct (15) being placed under the dependency of the safety valve (4).

10. Safety device according to Claim 9, wherein the safety valve (4) comprises a second assembly that can be displaced in translation under the effect of the pressure of the coolant present in the duct (15) .

11. Safety device according to Claim 10, wherein an end of the duct (15) forms a second seat (27), the second assembly comprising a second plugging device (28) secured to a second piston (29) on which a second spring (30) presses, which keeps the second plugging device (28) pressed onto the second seat (27) .

12. Safety device according to any one of the preceding claims, wherein there are provided at least one device for setting the first pressure level (31) of the first pressure level and/or at least one device for setting the second pressure level (16) of the second pressure level.

13. Compressor (44) for a coolant circuit, comprising a safety device (1) according to any one of the preceding claims.

14. Compressor according to Claim 13, comprising a compression mechanism (37) driven by an electric motor (35) and a control device (33) of the electric motor (35), the control device (33) being placed under the dependency of the electrical information item.

15. Compressor according to one of Claims 13 and 14, **characterized in that** the control device (33) is capable of ordering a reduction of the pressure of the coolant after having received said electrical information item from the safety device (1).

16. Compressor according to one of Claims 13 and 14, **characterized in that** the control device (33) is capable of deactivating the compressor (44) after having received said electrical information item from the safety device (1).
